# EUROPEAN PATENT APPLICATION

(11) **EP 2 332 413 A1**
(43) Date of publication of application: **15.06.2011**
(21) Application number: 10193380.2
(22) Date of filing: 01.12.2010
(51) Int. Cl.: A21C 9/04, A21C 9/08

(54) **An apparatus for portioning and positioning solid portions of food products and a process therefor**

(30) Priority: 11.12.2009 IT MI20092174
(71) Applicant: Zenatti, Sandro, 20094 Corsico (MI) (IT)
(72) Inventor: Zenatti, Sandro, 20094 Corsico (MI) (IT)
(74) Representative: Corradini, Corrado

(57) **Abstract**

An apparatus for portioning and positioning portions (40) of food products in a solid state on semi-finished food products (61) comprises at least a cutting device (20) designed to fashion the portions of food product on the semi-finished food products, wherein the cutting device (20) is provided with extracting elements (31) for enabling expulsion of the portions and arrangement thereof and wherein the apparatus further comprises at least a positioning apparatus of the portions designed to position the portions in such a way that the portions (40) are each deposited on a corresponding semi-finished product (61).

## Description

The present invention relates to an apparatus for portioning and positioning portions of food products and a process therefor.

The invention can be applied, in particular though not exclusively, to portioning and positioning food portions, such as cheeses in the solid state on pizza bases, entirely automatically.

At present the process of topping uses a particular cheese which during the stage of being used for topping is in the liquid state, usually quite dense but not solid.

There are no systems in existence however which enable portioning and positioning of slices of cheese starting from, and directly in, the solid state, i.e. starting from whole cheeses.

US 4,112,834 discloses a system for depositing a plurality of pepperoni and cheese slices on pizza pie shells made of pastry. Both the pepperoni and the cheese are conveyed through respective cutting or slicing means and the resulting plurality of portions of food fall all onto a single pizza pie.

The aim of the present invention is to obviate the above-mentioned drawbacks, by means of an apparatus which enables portioning and positioning of portions of food products, in particular starting from whole cheeses in the solid state, in order to obtain the depositing thereof in solid form, and not grated.

A further aim of the present invention is to enable portioning and positioning of portions of food products having variable dimensions according to needs.

A further aim of the present invention is to enable portioning and positioning of portions of food products on an individual basis.

A further aim of the invention is to attain the above-stated aim in a way which is practical and relatively inexpensive.

The aims are attained with an apparatus for portioning and positioning portions of food products in the solid state on semi-finished food products, characterised in that it comprises at least a cutting device designed to form the portions of products to be positioned on the semi-finished food products, wherein the cutting device is provided with extracting elements for enabling expulsion of the portions and wherein the apparatus further comprises at least a positioning apparatus of the portions destined to position the portions such that they are each deposited on a corresponding semi-finished product.

Among the advantages of the invention is the fact that it enables using cheese, which before being deposited on the pizza base undergoes only processes which do not modify its molecular structure but only the shape of the cheese, which leads to a considerable improvement in the quality of the finished product.

A further, not less important advantage of an embodiment of the invention, is that it allows to position a single portion of food product on an individual semi-finished food product of small dimensions.

Further characteristics of the invention can be deduced from the dependent claims.

Further characteristics and advantages of the invention will emerge from a reading of the following description, which is provided by way of non-limiting example, with the aid of the figures illustrated in the accompanying tables of the drawings, in which:
figure 1 is a schematic view of a whole cheese in the stage of being cut into slices;
figure 2 is a plan view of a cutter destined to cut portions of cheese from the slices of figure 1;
figure 3 is a lateral view of a first embodiment of a cutter designed to cut portions of cheese;
figure 4 is a view from above of a first conveyor belt destined to transport portions of cheese expelled from the cutter;
figure 5 is a first gripping system of the portions of cheese in three different operating positions;
figure 6 illustrates a possible actuating system of the gripping system of figure 5;
figure 7 illustrates an alternative gripping system of the cheese portions in two different operating positions;
figure 8 illustrates a positioning system of the cheese portions on the final product;
figure 9 is a lateral view of a second embodiment of a cutter designed to cut portions of cheese in a first operative position; and
figure 10 is a lateral view of a the embodiment of fig. 9 in a second operative position.

The figures illustrate an apparatus for portioning and positioning portions of food products.

In the following description, which is offered by way of example, reference will be made to positioning slices of cheese in the solid state on pizza bases, with the understanding that the concepts expressed in the present description can be extended to all similar cases of portioning and positioning.

In general, the various embodiments of the invention are all suitable to position a single portion of food product, such as cheese, on an individual pizza pie, or similar semi-finished food product, of small dimensions.

All the disclosed embodiments allow to realize a one to one correspondence between a single portion of food product and corresponding semi-finished food product.

In particular, a distinction will be made between the condition of the sliced cheese 11 starting from a whole cheese 10, and the cut cheese starting from the slices 11 in the form of single portions 40.

The apparatus of the invention can especially comprise a cutting unit.

In the illustrated embodiment, the process starts from a whole cheese 10 in solid state, having a conformation which exhibits a rectangular or square section. Thus a blade is used (not illustrated for the sake of simplicity) for cutting the cheese, creating a plurality of slices 11 of a desired thickness.

In particular a machine alike to an automatic slicer can be used for cutting.

The slices 11 of cheese are aligned with one another in order to enable a following processing using lateral guides and pneumatic compacters and are thus transported by a conveyor towards a cutting position.

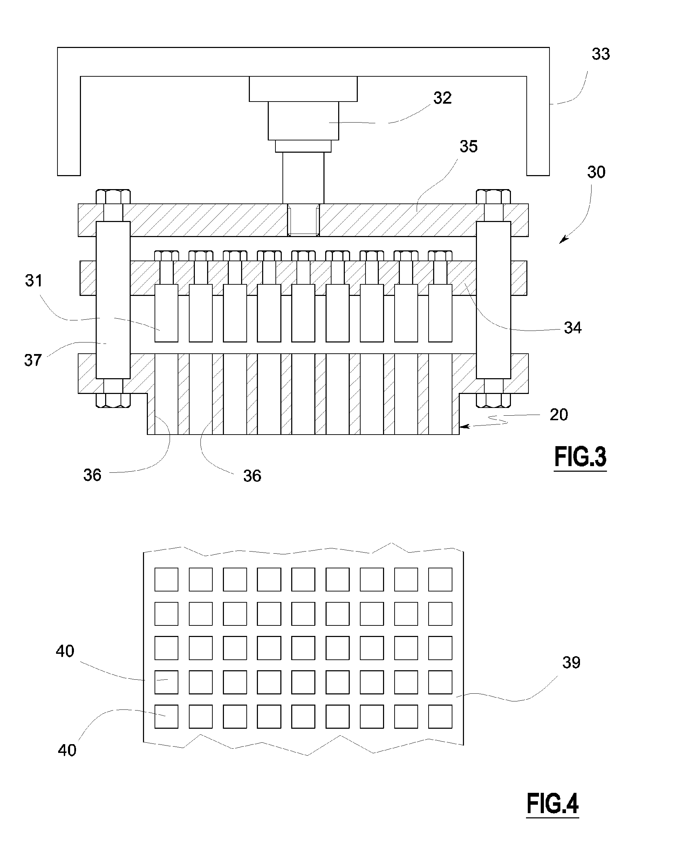

In this position, by using a cutter 20 subdivided into single squares 21 or other equivalent shapes, the portions 40 of cheese to be used for topping the pizzas are obtained. The cutter 20 is associated to an operative block 30 (figure 3), in turn supplied with special punch extractors 31 which enable the expulsion of the portions 40 of cheese, at the same time preventing problems of sticking between the single portions 40. The punch extractors 31 can be commanded singly, i.e. one at a time, or with a single command, as in the version illustrated in figure 3. The cutter 20 can be brought into the exact position to pick up the cheese slice 11 by means of a camera (not represented).

In more detail, the cutter 20 is an instrument constituted by a cutting profile which reproduces a determined shape.

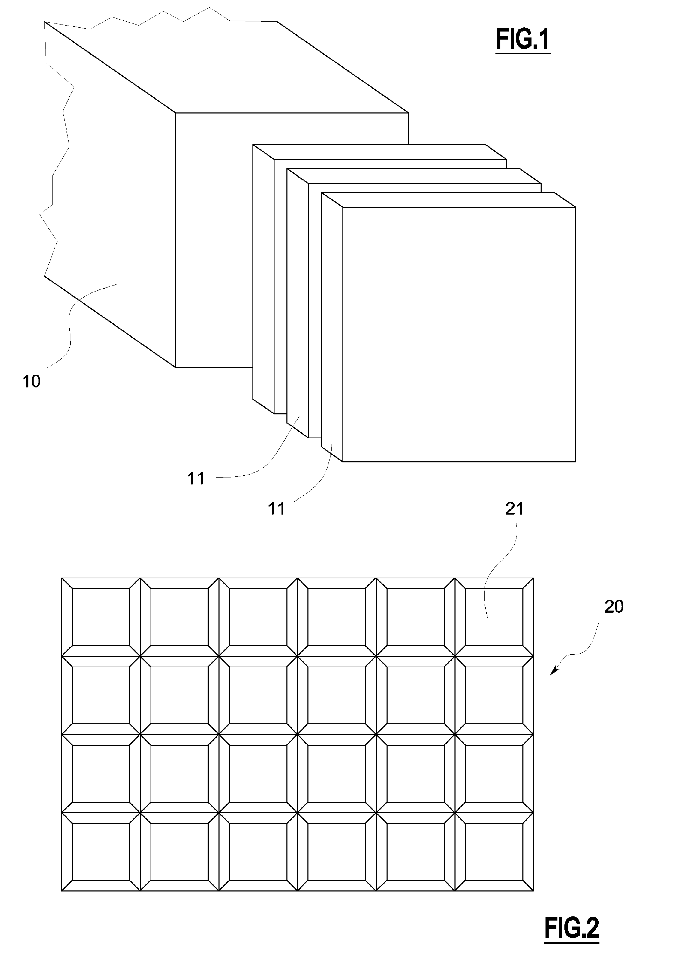

In the specific case, though not limited thereto, a grid of squares 21 seen from above, as represented in figure 2, is comprised, in which each square 21 corresponds to a portion 40 of cheese to be cut for subsequent working.

As it presses thereon, the cutter 20 slices the cheese and thus creates the portions 40 for subsequent processing.

After this pressure, the portions 40 of cheese are temporarily constrained to the cutter 20, i.e. they remain attached to the grid structure.

This enables the cutter 20 to be moved on various planes without losing portions of cheese 40.

An expulsion system of the product, realised with an electro-pneumatic system (cylinder 32) detaches the portions from the cutter 20.

The cylinder 32 acts on a movement plate of the punches 31, which plate in turn acts on a punch-bearing plate 34 such that the punches 31 each insert respectively in a receiving hole 36 in the body of the cutter 20. Centring elements 37 facilitate this insertion.

Thus the cut product is expelled, and the product is also opportunely portioned.

With the cutting operation the slices 11 of cheese to be cut are of such a size as to be compatible with the cutter. For example: 9 portions of 13mm side form a total perimeter of 117 mm.

The whole cheese of the present illustration has a side of about 120mm, thus leaving a slight excess on the sides. This excess is removed by a jet of compressed air, which keeps the working area clean.

The opposite situation can obtain, however, i.e. the side of the cheese to be cut does not cover the whole perimeter, for example: a request for 117mm against a cheese perimeter of 100mm.

In this case "holes" are created, i.e. a lack of cheese in some sections of the cutter 20, or a partial filling.

Two ways are provided to control a like situation.

The first involves the use of a viewing system, i.e. after cutting, the automated system places the cutter in the detecting area for the viewing system; in this way it can be observed how the cutter has been loaded, and permission can be given for correct expulsion.

The expulsion system of the cutter uses depression sensors, which in combination with suckers controls the presence of a depression. If there is a depression, the portion can be deposited; otherwise it is considered that the portion has not been loaded.

In this way it can be verified whether the portion present is of acceptable dimensions for operating the deposit, possibly avoiding the portions not considered to be good enough, which portions might be discharged into a dedicated position therefor.

At this point there is a first positioning, for which a robotic system is used having a robot with Cartesian axes X-Y-Z, or a Scara robot, or an anthropomorphic robot.

After having performed the cutting operation, the robotic system positions all the portions on a further supply belt, and commands the expulsion organs to detach the cut cheese from the cutter. The positioning grid is variable, according to the type of pizza base or other product to be topped.

The robotic system, or the Cartesian axes, move the cutter 20, loaded with product, from the belt on which the cutting has been done onto the conveyor belt 39.

The product is expelled from the cutter 20 onto the belt 39.

The expulsion can take place in the following preferred ways. In the first of these ways, all the cheese portions are cut in a single solution, or each portion can be cut singly.

The expulsion position depends on some factors such as the geometry of the die, the advancing velocity of the pizza bases to be topped, the temperature of the cheese and others besides.

In any case, the expulsion of the portions is controlled by an automatic system which controls the positions of all the components of the system.

At this point a second positioning is performed: the single portions, now on the final supply belt 91, are positioned at distances which are compatible with the finished product. This positioning is variable, according to the type of product and the velocity of production of the products to be topped.

In the second positioning, a laser sensor stops the conveyor belt precisely in a determined position and a gripping system acts on the portions 40 to distance them appropriately.

A first possibility is the use of pneumatic pistons 50 which end in a point, such as to exhibit a sort of needle 51.

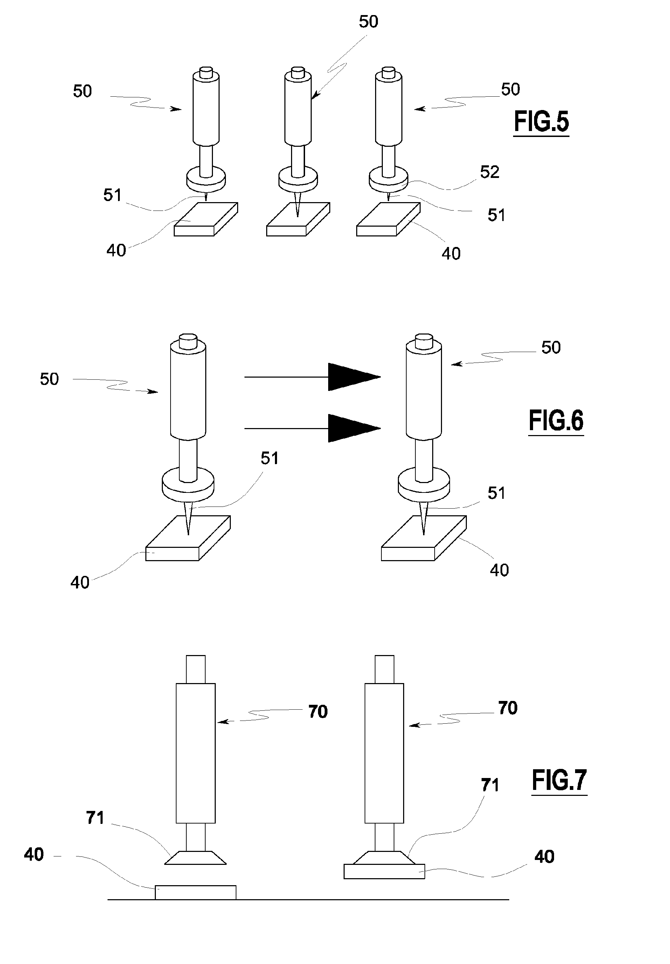

In the case of the piston with the needle 51, the exit of the piston pierces the portion 40 of cheese, and the retraction of the piston causes the portion to detach, facilitated by an appropriate mechanical stop 52 (see the sequence of figure 5).

A variant comprises a pneumatic piston 70 with a sucker 71 at the end thereof, connected to a system of creation and breakage of the depression, for controlled picking up and release of the portions 40 (see the sequence of figure 7).

In the case of the depression, the extension of the piston corresponds to the placing of the sucker under depression. The sucker, once in contact with the cheese, picks the cheese up. Detachment is achieved by breaking the depression by blowing air into the depression circuit.

Once pierced (or picked up by means of a depression), the portions 40 must be positioned compatibly with the positioning necessities. This operation is done thanks to a positioning system which spaces the pistons, and the corresponding portions interested thereby, up to the release level (figure 6, in relation to an example of a piston with a needle).

The pistons are connected to grub screws or synchronous cogged belts. The motorised system enables the positioning heights to be managed and commands to be given for expulsion of the portions.

The positioning stages have the following sequence; firstly, in the initial position there is a wait for the portioned part of the product.

When the product arrives it is detected by an optic sensor, for example a laser or a LED.

The pistons then descend, with a relative picking-up of the portions by means of the needle or the sucker.

Then the pistons are raised to an intermediate height, without complete retraction, followed by a widening of the pistons.

All of the system then advances to enable release onto the auxiliary conveyor belt or directly on the pizza bases.

The pistons then retract or the depression is broken, with a consequent release of the cheese.

There can also be an intermediate positioning if the pistons are on several rows, with an ordered release of the cheese.

Then return is made to the initial position and the described cycle is restarted.

The detachment of the single portions can be done in various ways, for example by depositing on the auxiliary conveyor: in this case the robot positions the single portions of cheese with identical geometry to that of the pizza bases to be topped downstream of the apparatus.

The conveyor belt also has a buffer function, as a variable number of portions of cheese can be deposited thereon (the distance between the various portions, now in rows). The belt is synchronised with the client's production line with the use of suitable sensors (encoders, photo-cells and exchange contacts between the machines).

The portions are now on a conveyor belt 91, with a determined geometry.

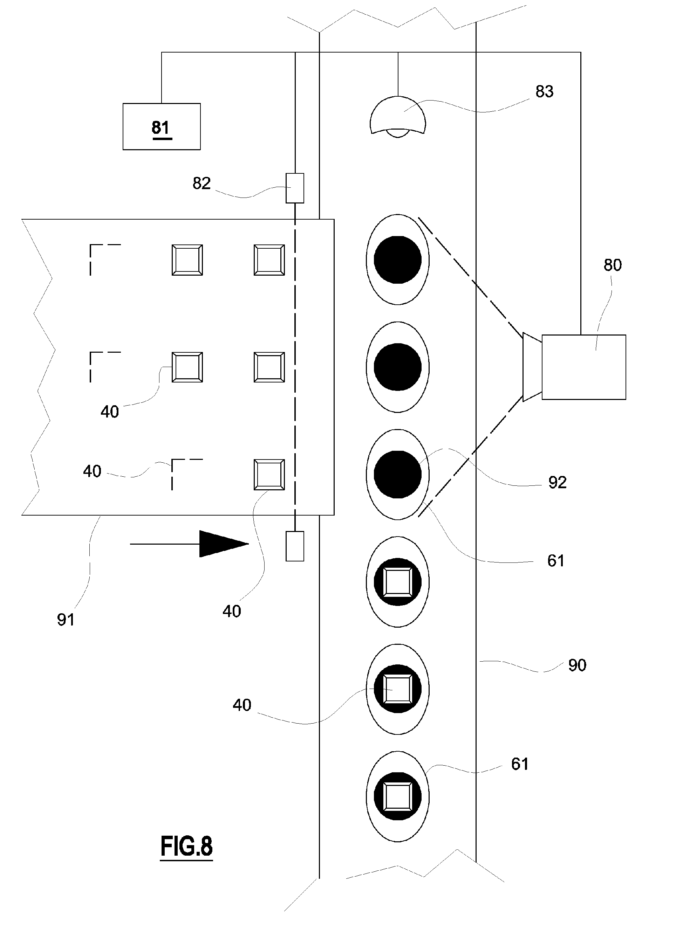

On the basis of the characteristics of the products and the velocity, the portions can fall by force of gravity on the finished product (figure 8).

As a variant of the invention, an electro-pneumatic system can be used to facilitate transfer of the product from the belt directly onto the product to be topped.

In this case, the robotic system positions itself over the pizza bases to be topped and then commands expulsion of the cheese portions. The coordinates for the expulsion can be calculated by encoders, or directly by the viewing system also used for the control of the correct depositing on all the product for an optimal quality control.

With the aim of guaranteeing correct production, i.e. 100% of portions correctly deposited, a viewing system is used, made up at least by a light 83, a television camera 80, a control unit 81 and an interfacing unit with the production line.

In the functioning of the viewing system, the camera 80 frames the portions 40, duly lit by the light 83, which amplifies the colour tones.

The installed software program seeks, internally of the image acquisition area, drops of tomato 92 deposited on the semi-finished pizza bases 61 and marks the positions, assigning them a numeric value. A sub-area is created internally of the acquisition area, and is called the end-process area.

In this area, the marked pizza bases are sought and if found it means that the depositing system of the cheese has missed or fallen off the pizza, due to faults or excessive cheese infeed velocity.

In this case, an acoustic and/or visual signal can be given, or the production line can be stopped to enable correction of the error.

This system can give the coordinates of the single pizza bases conveyed by the belt 90 and to be topped to the robotic group, such as to enable rapid depositing of the cheese portions on the pizza bases, or the elimination thereof from the belt 91.

The movement of the belt 91 can be regulated by a photocell 82.

Various television cameras can be connected, in different positions and with different functions.

The control system is the same, the various t.v. cameras enable discrimination of the cheese portions and the pizza bases to be topped, the calculation of the coordinates for the rapid depositing of the cheese, and so on.

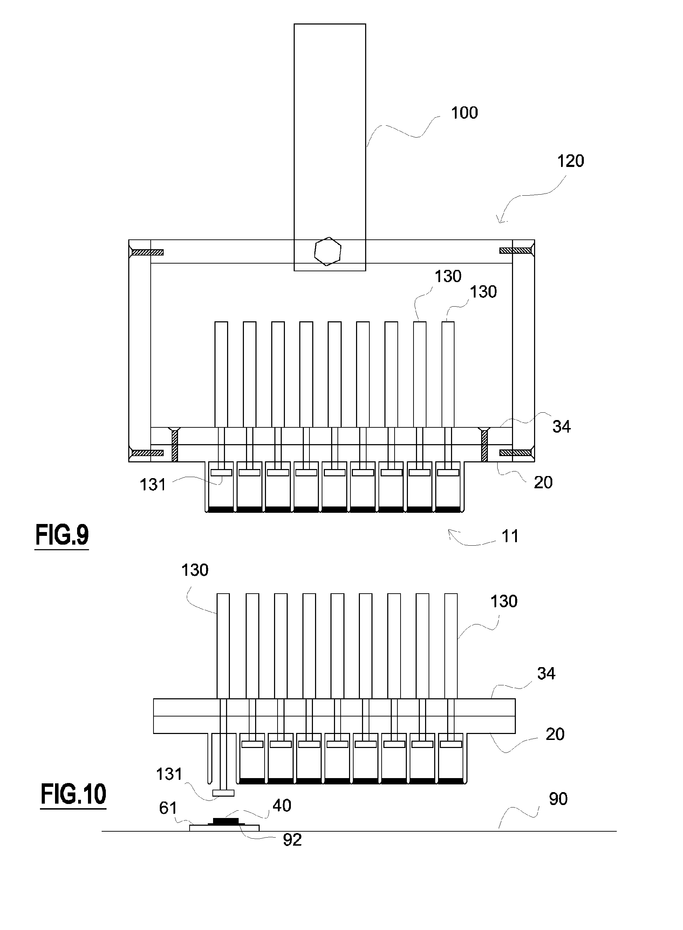

A second embodiment of a cutter 120 is represented in fig. 9.

In this case the cutter 120, equipped with a shaft 100 that connects the cutter 120 to robot movement means (not represented for simplicity), is further equipped with a supporting structure 101 having a "C" shape that holds the punch bearing plate 34 and the cutter 120 that holds a slice 11 of cheese.

The supporting structure 101 also holds a plurality of pneumatic cylinders 130, each one of the cylinders 130 being suitable to cut a single portion 40 of cheese by means of a moving piston 131.

In figure 10 the operation of is the cutter 120 is shown.

The cutter 120 is brought into the exact position to pick up a cheese slice 11 by means of a camera (not represented).

Each piston 131 is moved in order to place a single portion 40 of cheese over the drop of tomato 92 belonging to a single semi-finished pizza base 61.

To achieve this result, the semi-finished pizza bases 61 are advanced on the belt 90 and the cutter 120, after having taken a slice 11 of cheese from the cheese conveyor, is positioned directly over the belt 90 that is advancing the pizza bases 61.

The cutter 120 is then operated by acting one after another the pistons 131 in such a way that each single portion 40 is expelled from the cutter and deposited over a respective pizza base 61.

Also in this case, the coordinates for the expulsion can be calculated by encoders, or directly by a viewing system such as the one made up by a light 83, a television camera 80, a control unit 81 and an interfacing unit.

After having expelled all the cheese portions 40, the cutter 120 is brought back to the conveyor of the cheese slices 11 to pick up another slice 11 and repeat the above operations.

Obviously modifications or improvements dictated by contingent or particular motivations can be brought to the invention as it is described herein without its forsaking the ambit of the invention as claimed herein below.

## Claims

1. An apparatus for portioning and positioning portions of food products in a solid state on semi-finished food products, **characterised in that** it comprises at least a cutting device designed to fashion the portions of food product on the semi-finished food products, wherein the cutting device is provided with extracting elements for enabling expulsion of the portions and wherein the apparatus further comprises at least a positioning apparatus of the portions designed to position the portions in such a way that the portions are each deposited on a corresponding semi-finished product.

2. The apparatus of claim 1, wherein the cutting device exhibits an extraction group formed by a plurality of punches, destined to act simultaneously or singly for extracting the portions.

3. The apparatus of claim 2, wherein a viewing group is associated to the cutting device, which viewing group is destined to verify a correct loading of the cutting device and is also destined to generate a consent signal for expulsion.

4. The apparatus of claim 1, wherein the portion positioning apparatus comprises gripping means for each of the portions, the gripping means being provided with regulatable distancing means for regulating a reciprocal position of the portions on a conveyor element.

5. The apparatus of claim 4, wherein the portion positioning apparatus comprises robotic gripping means for performing the gripping and positioning of each of the portions.

6. The apparatus of claim 4, wherein the portion positioning apparatus comprises gripping means including pneumatic pistons provided with a gripping needle or a sucker.

7. The apparatus of claim 4, wherein the positioning apparatus further comprises a viewing system for determining a position of each single semi-finished work product and for coordinating the positioning of the portions of solid-state food product on each said single semi-finished work product.

8. The apparatus of claim 1, wherein the positioning apparatus further comprises a robotic system for depositing the portions each on each single semi-finished food product.

9. A method for portioning and positioning food portions in a solid state on semi-finished food products, comprising a portioning stage performed by means of a cutting device for fashioning portions of food products to be positioned on the semi-finished food products and a stage of arrangement of each of the portions on a respective semi-finished product.

10. The method of claim 9, wherein the stage of portioning is followed by a stage of extraction of the portions in a suitable position for conveying thereof on conveying means.

11. The method of claim 10, wherein the stage of positioning the portions in a suitable position for conveying thereof is followed by a stage of reciprocal distancing of the portions.
